# EUROPÄISCHE PATENTSCHRIFT

(11) **EP 2 899 419 B1**
(45) Veröffentlichungstag und Bekanntmachung des Hinweises auf die Patenterteilung: **15.03.2017**
(21) Anmeldenummer: 14199087.9
(22) Anmeldetag: 19.12.2014
(51) Int. Cl.: F16D 13/58

(54) **Tellerfederkupplung**
Diaphragm clutch
Embrayage à disques

(30) Priorität: 27.01.2014 DE 102014201401
(43) Veröffentlichungstag der Anmeldung: 29.07.2015
(73) Patentinhaber: Schaeffler Technologies AG & Co. KG, 91074 Herzogenaurach (DE)
(72) Erfinder: Voorspoels, Ludovic, 67410 Drusenheim (FR); Fohrer, Thierry, 67850 Offendorf (FR); Merckling, Tony, 67340 Schillersdorf (FR)

(56) Entgegenhaltungen:
- EP-A1- 1 933 050
- DE-A1- 19 716 396
- DE-A1-102013 200 496
- FR-A1- 2 693 244
- GB-A- 2 269 866

## Beschreibung

Die Erfindung betrifft eine Tellerfederkupplung für ein Kraftfahrzeug gemäß dem Oberbegriff des Patentanspruchs 1.

Tellerfederkupplungen sind im Automotive-Bereich gebräuchlich zur steuerbaren bzw. trennbaren Kraftübertragung zwischen Verbrennungsmotor und Getriebe. Bekannte Tellerfederkupplungen umfassen typischerweise ein mit der Schwungscheibe des Motors verbundenes, also mit dem Motor rotierendes Kupplungsgehäuse, eine gelenkig mit dem Kupplungsgehäuse verbundene Tellerfeder sowie eine Anpressplatte, welche sich mittels der Tellerfeder mit variabler Anpresskraft auf eine mit der Getriebe-Eingangswelle verbundene Kupplungsscheibe mit Reibbelägen pressen lässt. Hierdurch wird die Kupplungsscheibe zwischen Anpressplatte und Schwungscheibe eingeklemmt und stellt somit eine reibschlüssige, lösbare rotatorische Kopplung zwischen Schwungscheibe und Getriebewelle her.

Die Kupplungs-Anpressplatte ist üblicherweise ein spanend nachbearbeitetes Gussteil, wobei auf der der Tellerfeder zugewandten Oberfläche der Anpressplatte typischerweise Nocken angeordnet sind, die zur Kraftübertragung zwischen Tellerfeder und Anpressplatte dienen, indem die Tellerfeder zum Einrücken der Kupplung auf die Nocken der Anpressplatte drückt.

Die Herstellung der mit Nocken versehenen Anpressplatte bei bekannten Tellerfederkupplungen ist jedoch verhältnismäßig aufwändig und damit kostenintensiv, insbesondere was die spanende Bearbeitung der mit den Nocken versehenen und damit geometrisch relativ komplexen Oberfläche der Anpressplatte betrifft. Weiterhin führen die einstückig mit der Anpressplatte ausgeführten Nocken zu einer nicht unerheblichen Wärmeübertragung auf die Tellerfeder, welche jedoch unerwünscht ist, da sich durch zu hohe Temperaturen Gefügeänderungen oder Setzverluste bei der Tellerfeder ergeben können.

Zur Veränderung der Kupplungscharakteristik solcher bekannter Tellerfederkupplungen ist es zudem häufig erforderlich, die radiale Position der Nocken auf der Anpressplatte und/oder die Form bzw. Höhe der Nocken in Axialrichtung der Kupplung zu verändern. Auch hiermit sind oftmals verhältnismäßig aufwändige Änderungen in Konstruktion und Fertigung, bis hin zur Änderung des der Anpressplatte zugrunde liegenden Gussteils, verbunden.

Eine Tellerfederkupplung gemäß dem Oberbegriff des Patentanspruchs 1 ist aus der GB 2 269 866 A bekannt.

Es ist Aufgabe der vorliegenden Erfindung, eine Tellerfederkupplung zur Verfügung zu stellen, die im Vergleich zum Stand der Technik preiswerter bzw. einfacher zu realisieren ist, bei der die Wärmeübertragung auf die Tellerfeder und damit beispielsweise verbundene Setzverluste der Tellerfeder reduziert werden können, und deren Charakteristik mit geringerem Aufwand geändert werden kann.

Diese Aufgabe wird erfindungsgemäß gelöst durch eine Tellerfederkupplung gemäß Patentanspruch 1. Bevorzugte Ausführungsbeispiele der Erfindung sind in den abhängigen Patentansprüchen dargelegt.

Die Tellerfederkupplung umfasst in zunächst bekannter Weise eine Anpressplatte, ein Kupplungsgehäuse sowie eine gelenkig mit dem Kupplungsgehäuse verbundene Tellerfeder. Dabei ist in für sich genommen ebenfalls bekannter Weise zwischen Tellerfeder und Anpressplatte entlang einer Umfangslinie der Tellerfeder verteilt eine Mehrzahl von Drucknocken zur Kraftübertragung von der Umfangslinie der Tellerfeder auf die Anpressplatte angeordnet.

Die Anordnung der Drucknocken an der Tellerfeder ist vorteilhaft zunächst einmal in Bezug auf die damit ermöglichte einfachere Geometrie, Gestaltung und Herstellung der Anpressplatte und im Hinblick auf die damit verbundene Kostenersparnis bei der Urformung insbesondere durch Gießen, sowie bei der beispielsweise spanenden Bearbeitung der Anpressplatte, da die Anpressplatte erfindungsgemäß keine Drucknocken mehr benötigt, und somit schneller, einfacher und kostengünstiger hergestellt werden kann.

Ferner ergibt sich durch die mit der Anordnung der Drucknocken an der Tellerfeder verbundene geänderte Geometrie der Drucknocken sowie durch die größere Entfernung der Kontaktflächen zwischen Tellerfeder bzw. Drucknocken und Anpressplatte eine entscheidend reduzierte Wärmeübertragung von der Anpressplatte auf die Tellerfeder. Hierdurch werden Temperaturbelastungen der Tellerfeder und damit verbundene Setzverluste maßgeblich verringert, was die Gebrauchsdauer der Kupplung erhöht und den Bedarf zur Nachstellung der Kupplung im Verlauf deren Lebensdauer verringert. Ebenso kann für die Drucknocken ein besonders abriebfestes Material gewählt werden, was ebenfalls der wartungsfreien Gebrauchsdauer der Kupplung entgegenkommt.

Die Drucknocken sind als jeweils eigenständige Bauteile ausgebildet, welche mit der Tellerfeder verbunden sind.

Auf diese Weise ergibt sich eine hohe Variabilität bzw. Modularität für die Tellerfederkupplung, bis hin zur vereinfachten Ausbildung eines Kupplung-Baukastensystems, da die Drucknocken mit unterschiedlichen Maßen und/oder Geometrien ausgebildet und jeweils beispielsweise mit ein und derselben Tellerfeder und Anpressplatte kombiniert werden können, wodurch sich mit geringem Änderungsaufwand Kupplungen mit unterschiedlichen Charakteristiken darstellen lassen. Beispielsweise kann die Höhe der Drucknocken und der wirksame Druckpunkt-Durchmesser der Kupplung durch lediglich Änderung der Maße/Geometrieen der Drucknocken geändert werden, wodurch sich entsprechende Änderungen in der Charakteristik (z.B. Betätigungskräfte, Drehmomentübertragung) der Kupplung ergeben.

Auch können die Drucknocken auf diese Weise (unabhängig von den Materialien von Tellerfeder und Anpressplatte) in einem besonders geeigneten, beispielsweise abriebfesten und/oder gering wärmeleitenden Material ausgeführt werden, was wiederum der Betriebssicherheit und Lebensdauer der Tellerfederkupplung entgegenkommt. Schließlich kann die Tellerfederkupplung dank dieser Ausführungsform als alternative Bauform bestehender Kupplungen eingeführt werden, indem lediglich Anpressplatte, Drucknocken und Tellerfeder durch die erfindungsgemäße Ausführung ersetzt werden, wohingegen die übrigen Kupplungsbauteile weitestgehend unverändert beibehalten werden können.

Erfindungsgemäß sind die als eigenständige Bauteile ausgebildeten Drucknocken mit der Tellerfeder vernietet. Hierdurch ergibt sich eine kostengünstige Herstellung der Einheit aus Tellerfeder und mit der Tellerfeder verbundenen Drucknocken, und eine Wärmebelastung der Tellerfeder während der Verbindung mit den Drucknocken wird vermieden.

Gemäß einer weiteren, bevorzugten Ausführungsform der Erfindung sind die Drucknocken versetzt oder gekröpft ausgebildet. Auf diese Weise wird die Variabilität der Kupplungscharakteristik bzw. Kupplungskennlinien noch weiter vergrößert, indem dank dieser Ausführungsform die Kupplungsgeometrie, die effektive Tellerfeder-Elastizität sowie die effektiven Kraft-Hebellängen zwischen Tellerfeder und Anpressplatte sehr einfach dadurch geändert werden können, dass lediglich die Geometrie der Drucknocken und/oder der Durchmesser der Umfangslinie der Drucknocken-Befestigung an der Tellerfeder verändert werden. Auch kann dank dieser Ausführungsform der Befestigungspunkt der Drucknocken an der Tellerfeder auf einem anderen Radius als der Druckpunkt zwischen den Drucknocken und der Anpressplatte angeordnet werden. Auf diese Weise lassen sich insbesondere auch Bauraumoptimierungen erzielen, wodurch die Kupplung in axialer und/oder radialer Richtung entsprechend kleiner gebaut werden kann.

Eine weitere bevorzugte Ausführungsform der Erfindung sieht vor, dass die Verbindung zwischen den Drucknocken der Tellerfeder im Bereich von (im Wesentlichen radial verlaufenden) Zungen der Tellerfeder angeordnet ist. Auch diese Ausführungsform ist insbesondere vorteilhaft im Hinblick auf Bauraumoptimierung sowie im Hinblick auf die weitere Anpassung bzw. Veränderung der Tellerfeder-Kennlinie oder -Härte dadurch, dass die Form und oder der Verbindungsort der Drucknocken mit der Tellerfeder in noch weiterem Umfang verändert und somit an die geforderte Kupplungscharakteristik angepasst werden kann.

Im Folgenden wird die Erfindung anhand lediglich Ausführungsbeispiele darstellender Zeichnungen näher erläutert. Dabei zeigt:
**Fig. 1** in schematischer Schnittdarstellung zunächst eine Tellerfederkupplung gemäß dem Stand der Technik;
**Fig. 2** in einer **Fig. 1** entsprechenden Darstellung eine Tellerfederkupplung gemäß einer Ausführungsform der Erfindung mit separaten Drucknocken 6;
**Fig. 3** einen Drucknocken 6 der Tellerfederkupplung gemäß **Fig. 2**;
**Fig. 4** in schematischer Draufsicht die Tellerfeder 4 der Kupplung gemäß **Fig. 2**;
**Fig. 5** in einer **Fig. 2** entsprechenden Darstellung eine Tellerfederkupplung gemäß einer weiteren Ausführungsform mit gekröpften Drucknocken 6;
**Fig. 6** einen Drucknocken 6 der Tellerfederkupplung gemäß **Fig. 5**; und
**Fig. 7** in einer **Fig. 4** entsprechenden Darstellung die Tellerfeder 4 der Kupplung gemäß **Fig. 5****.**

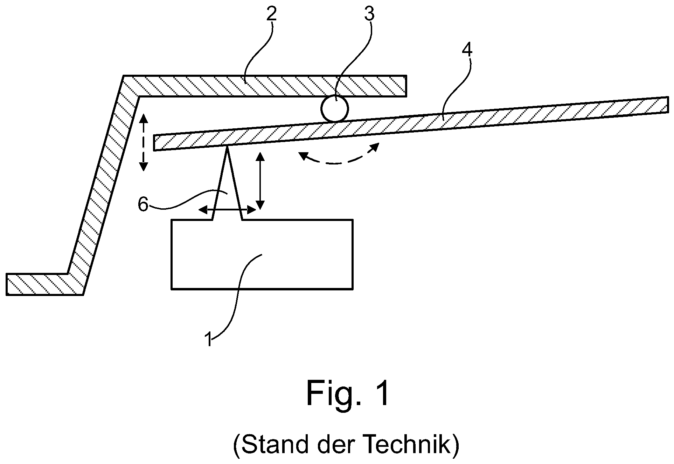

**Fig. 1** zeigt in höchst schematischer Darstellung einen Teilschnitt durch eine Tellerfederkupplung gemäß dem Stand der Technik. Man erkennt zunächst eine nur bereichsweise dargestellte Anpressplatte 1, ein Kupplungsgehäuse 2, eine mittels einer Mehrzahl von Gelenkpunkten 3 am Kupplungsgehäuse 2 beweglich befestigte Tellerfeder 4 sowie einen aus einer Mehrzahl an Drucknocken 6.

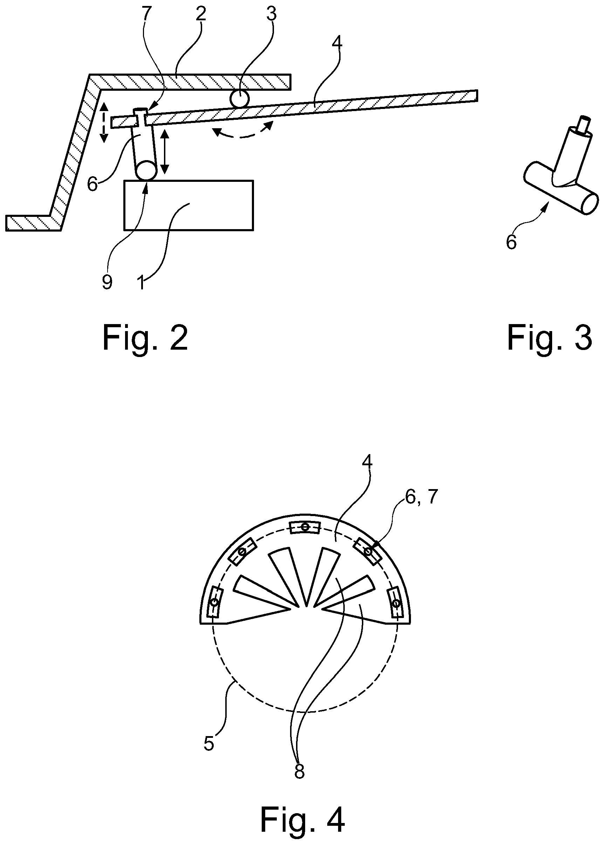

Durch elastisches Verkippen der Tellerfeder 4 um die (entlang einer Kreislinie auf der Innenseite des Kupplungsgehäuses 2 verteilt angeordneten) Gelenkpunkte 3 mittels Kupplungsbetätigung und Kupplungs-Ausrücker (letztere nicht dargestellt) bewegt sich der äußere (zeichnungsbezogen links gelegene) Umfangsbereich der Tellerfeder entlang der Axialrichtung der Kupplung (zeichnungsbezogen nach oben/unten) auf bzw. ab. Über die wieder entlang einer Kreislinie 5 (vgl. **Fig. 4**) auf der tellerfederseitigen Oberfläche der Anpressplatte 1 verteilt angeordneten Drucknocken 6 teilt sich die Betätigungsbewegung der Tellerfeder 4 der Anpressplatte 1 mit und presst diese entweder auf die mit der Getriebeeingangswelle verbundene Kupplungsscheibe (beides nicht dargestellt), oder ermöglicht Anpressplatte 1 und Kupplungsscheibe das Abheben von der (hier ebenfalls nicht dargestellten) Schwungscheibe des Verbrennungsmotors.

Man erkennt, dass die Anpressplatte 1 mit den daran einstückig angeformten Drucknocken 6 als verhältnismäßig komplexes (Guss-)Bauteil ausgebildet ist, welches vor dem Einbau in die Kupplung zudem umfänglich spanend bearbeitet werden muss. Da sich die Anpressplatte 1 im Betrieb der Kupplung teilweise stark erwärmt, kann sich die Wärme über die einstückig angeformten Drucknocken 6 direkt auch der Tellerfeder 4 mitteilen, was bei der Tellerfeder 4 zu unerwünschten Gefügeveränderungen und/oder Setzvorgängen führen kann.

Auch ist eine Veränderung der Geometrie bzw. Charakteristik der Tellerfederkupplung, die üblicherweise insbesondere durch Veränderung der radialen Position bzw. der Höhe der Drucknocken 6 erfolgt, beim Stand der Technik gemäß **Fig. 1** vergleichsweise aufwändig, und kann sogar Veränderungen an dem der Anpressplatte 1 zugrundeliegenden Gussteil erforderlich machen.

**Fig. 2** zeigt in einer **Fig. 1** entsprechenden, wieder höchst schematischen Darstellung eine Ausführungsform einer Tellerfederkupplung gemäß der vorliegenden Erfindung.

Man erkennt wieder Anpressplatte 1, Kupplungsgehäuse 2 und die Gelenkpunkte 3 für die gelenkige Verbindung der Tellerfeder 4 mit dem Kupplungsgehäuse 2. Im Unterschied zum Stand der Technik gemäß **Fig. 1** sind bei der Ausführungsform gemäß **Fig. 2** die Drucknocken 6 als separate Bauteile ausgebildet. Dabei sind die Drucknocken 6 in entsprechenden Bohrungen der Tellerfeder 4, die im Bereich einer Kreislinie 5 (vgl. **Fig. 4**) im radial äußeren Bereich der Tellerfeder 4 angeordnet sind, mit der Tellerfeder 4 bei 7 vernietet.

In **Fig. 3** ist einer der Drucknocken 6 der Kupplung gemäß **Fig. 2** nochmals separat dargestellt. Zudem zeigt **Fig. 4** die Tellerfeder 4 der Kupplung gemäß **Fig. 2** (ausschnittsweise) in Draufsicht. Dabei wird in **Fig. 4** auch die Gestaltung der Tellerfeder 4 mit einem durchgehenden ringförmigen Außenbereich bei 4, 6, 7 sowie mit Federzungen 8 ersichtlich, wobei an den Federzungen der Kupplungs-Ausrücker (nicht dargestellt) angreift. In dem ringförmigen Außenbereich der Tellerfeder 4 sind dabei in regelmäßigen Abständen die Drucknocken 6 eingenietet.

Man erkennt, dass die Ausführung der Drucknocken 6 als eigenständige Bauteile, die mit der Tellerfeder 4 z.B. mittels Vernietung 7 verbunden werden, dazu führt, dass die Anpressplatte 1 geometrisch stark vereinfacht ausgeführt werden kann, nämlich in Form einer einfachen Platte mit im Wesentlichen beidseitig durchgehend flachen Oberflächen. Dies ermöglicht eine entsprechend wesentlich vereinfachte Herstellung und Fertigbearbeitung der Anpressplatte 1 und damit verbundene, entsprechende Kosteneinsparungen.

Da außer der Einführung der separaten Drucknocken 6 und der vereinfachten Ausführung der Anpressplatte 1 keine weiteren, nennenswerten Änderungen an der Kupplung erforderlich sind, lässt sich die erfindungsgemäße Lösung problemlos auch in bestehende bzw. in ansonsten konventionelle Kupplungen einsetzen. Gleichzeitig wird damit eine fast unbegrenzte Variabilität der Kupplungscharakteristik im Sinne eines Baukastensystems erzielt, indem bei unveränderter Tellerfeder sowie Anpressplatte nur durch Auswahl unterschiedlich hoher bzw. unterschiedlich geformter Drucknocken, und ggf. durch Veränderung des Durchmessers der Kreislinie 5, auf der sich die Vernietungen 7 der Drucknocken 6 mit der Tellerfeder 4 befinden, Kupplungen mit entsprechend unterschiedlicher Charakteristik (Federhärte, Betätigungskraftverlauf, Drehmomentübertragung usw.) erhalten werden.

Dadurch, dass die Berührungspunkte bzw. linien zwischen Tellerfeder 4 und Anpressplatte 1 (dank der Zuordnung der Drucknocken 6 nicht mehr zur Anpressplatte 1, sondern zur Tellerfeder 4) nun nicht mehr an der Tellerfeder 4, sondern bei 9 an der Anpressplatte 1 liegen, wird zudem die Wärmeübertragung von der ggf. heißen Anpressplatte 1 der Kupplung über die Drucknocken 6 auf die Tellerfeder 4 entscheidend verringert. Dies kommt der Betriebssicherheit und Lebensdauer der Tellerfederkupplung vorteilhaft entgegen, da wärmebedingte Gefügeänderungen und damit verbundene etwaige Setzbewegungen der Tellerfeder auf diese Weise faktisch ausgeschlossen sind. Zusätzlich können auch die Drucknocken 6 selbst in einem vergleichsweise gering wärmeleitenden und/oder abriebfesten Werkstoff ausgeführt werden, wodurch sich die Wärmeübertragung auf die Tellerfeder 4 bzw. der Kupplungsverschleiß weiter verringern lässt.

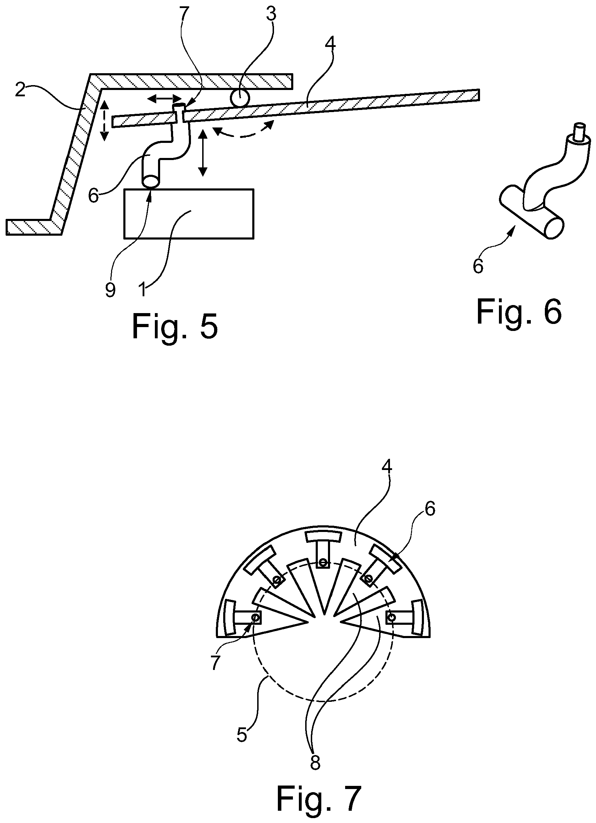

Die gekröpfte Ausführung des Drucknockens 6 gemäß Fig. 5 bis 7 erlaubt zudem eine nahezu beliebige Anpassung sowohl der effektiven Höhe der Drucknocken 6 als auch des effektiven Wirkdurchmessers, also des Durchmessers der Berührungspunkte bzw. linien 9 zwischen Drucknocken 6 und Anpressplatte 1, ohne dass hierzu nennenswerte Änderungen an den sonstigen Bauteilen der Kupplung erforderlich sind.

Auch lässt sich auf diese Weise, insbesondere durch Auswahl des Kröpfungsmaßes und entsprechenden Durchmessers der Kreislinie 5, auf der die Drucknocken 6 mit der Tellerfeder 4 vernietet werden, die Kennlinie bzw. Kupplungshärte anpassen, ohne dass sonstige Änderungen an der Kupplung erforderlich sind. Nicht zuletzt erlaubt die gekröpfte Ausführung der Drucknocken 6 auch eine Optimierung der Bauraumausnutzung innerhalb der Kupplung, so dass die Kupplung bei gleicher Leistungsfähigkeit in axialer und/oder radialer Richtung ggf. entsprechend kleiner ausgeführt werden kann, beispielsweise indem die Kröpfungsbereiche der Drucknocken 6 als Bauraum zur Unterbringung anderer Bauteile der Kupplung genutzt werden.

Im Ergebnis wird mit der Erfindung eine Tellerfederkupplung erhalten, die im Vergleich zum Stand der Technik reduzierte Herstellungskosten bei gleichzeitig erhöhter Variabilität und Modularität erwarten lässt. Zudem lässt sich aufgrund der Optimierung der Reibpaarung sowie aufgrund Minimierung der Wärmeübertragung zwischen Tellerfeder und Anpressplatte die Lebensdauer bzw. nachstellfreie Betriebsdauer der Kupplung maßgeblich erhöhen.

### Bezugszeichenliste

- 1: Anpressplatte
- 2: Kupplungsgehäuse
- 3: Tellerfeder-Aufhängung, Gelenkpunkt
- 4: Tellerfeder
- 5: Kreislinie, Befestigungsdurchmesser
- 6: Drucknocken
- 7: Vernietung
- 8: Tellerfeder-Zungen
- 9: Berührungspunkt, Berührungslinie

## Patentansprüche

1. Tellerfederkupplung für ein Kraftfahrzeug, die Kupplung umfassend eine Anpressplatte (1), ein Kupplungsgehäuse (2) sowie eine gelenkig (3) mit dem Kupplungsgehäuse (2) verbundene Tellerfeder (4), wobei zwischen Tellerfeder (4) und Anpressplatte (1) entlang einer Umfangslinie (5) der Tellerfeder (4) verteilt eine Mehrzahl von Drucknocken (6) zur Kraftübertragung von der Umfangslinie (5) der Tellerfeder (4) auf die Anpressplatte (1) angeordnet sind, wobei die Drucknocken (6) an der Tellerfeder (4) angeordnet und als jeweils eigenständiges Bauteil ausgebildet sind, **dadurch gekennzeichnet, dass** die Drucknocken (6) mit der Tellerfeder (4) vernietet sind.

2. Tellerfederkupplung nach Anspruch 1, **dadurch gekennzeichnet, dass** dass die Drucknocken (6) versetzt oder gekröpft ausgebildet sind.

3. Tellerfederkupplung nach Anspruch 1 oder 2, **dadurch gekennzeichnet, dass** die Vernietung (7) zwischen den Drucknocken (6) und der Tellerfeder (4) im Bereich von Zungen (8) der Tellerfeder (4) angeordnet ist.

## Claims

1. Disc spring clutch for a motor vehicle, the clutch comprising a pressure plate (1), a clutch housing (2) and a disc spring (4) which is connected articulatedly (3) to the clutch housing (2), wherein, between disc spring (4) and pressure plate (1), distributed along a circumferential line (5) of the disc spring (4), there is arranged a multiplicity of pressure cams (6) for transmitting force from the circumferential line (5) of the disc spring (4) to the pressure plate (1), wherein the pressure cams (6) are arranged on the disc spring (4) and are each formed as separate components, **characterized in that** the pressure cams (6) are riveted to the disc spring (4).

2. Disc spring clutch according to Claim 1, **characterized in that** the pressure cams (6) are of offset or cranked form.

3. Disc spring clutch according to Claim 1 or 2, **characterized in that** the riveted connection (7) between the pressure cams (6) and the disc spring (4) is arranged in the region of tongues (8) of the disc spring (4).

## Revendications

1. Embrayage à disques pour un véhicule automobile, l'embrayage comprenant une plaque de pressage (1), un boîtier d'embrayage (2) ainsi qu'un ressort à disques (4) connecté de manière articulée (3) au boîtier d'embrayage (2), une pluralité de cames de pression (6) pour le transfert de force d'une ligne périphérique (5) du ressort à disques (4) à la plaque de pressage (1) étant disposées entre le ressort à disques (4) et la plaque de pressage (1) de manière répartie le long de la ligne périphérique (5) du ressort à disques (4), les cames de pression (6) étant disposées sur le ressort à disques (4) et étant réalisées en tant que composant autonome respectif, **caractérisé en ce que** les cames de pression (6) sont rivetées au ressort à disques (4).

2. Embrayage à disques selon la revendication 1, **caractérisé en ce que** les cames de pression (6) sont réalisées de manière décalée ou coudées.

3. Embrayage à disques selon la revendication 1 ou 2, **caractérisé en ce que** le rivetage (7) entre les cames de pression (6) et le ressort à disques (4) est disposé dans la région de langues (8) du ressort à disques (4).
